# EUROPÄISCHE PATENTSCHRIFT

(11) **EP 3 061 337 B1**
(45) Veröffentlichungstag und Bekanntmachung des Hinweises auf die Patenterteilung: **06.12.2017**
(21) Anmeldenummer: 16151263.7
(22) Anmeldetag: 14.01.2016
(51) Int. Cl.: A01D 57/20, A01D 84/00

(54) **HEUWERBUNGSMASCHINE IN FORM EINES MERGERS**
HAYMAKING MACHINE IN THE FORM OF A MERGER
FANEUSE SOUS FORME DE DISPOSITIF COLLECTEUR

(30) Priorität: 27.02.2015 DE 102015002560
(43) Veröffentlichungstag der Anmeldung: 31.08.2016
(73) Patentinhaber: PÖTTINGER Landtechnik GmbH, 4710 Grieskirchen (AT)
(72) Erfinder: Baldinger, Markus, 4084 St. Agatha (AT); Lehner, Josef, 4732 St. Thomas (AT)
(74) Vertreter: Thoma, Michael

(56) Entgegenhaltungen:
- EP-A1- 0 255 458
- EP-A1- 1 593 294
- DE-U1-202010 010 038
- US-A- 6 050 075
- US-A1- 2005 126 153

## Beschreibung

Die vorliegende Erfindung betrifft eine Heuwerbungsmaschine in Form eines Mergers zum Schwaden und/oder Querversetzen von Erntegut, mit zumindest einer Mergereinheit, die einen Aufsammelförderer zum Aufsammeln des Ernteguts vom Boden und einen Querförderer zum Querfördern des aufgesammelten Ernteguts quer zur Fahrtrichtung umfasst, wobei die zumindest eine Mergereinheit an einem Anbaurahmen aufgehängt ist, der an einem Schlepper anhebbar und absenkbar anbaubar ist, so dass die Mergereinheit vom Boden aushebbar ist.

Solche Merger sind üblicherweise an einen Schlepper anbaubare Anbaugeräte, die halm- und/oder blattförmiges Erntegut wie beispielsweise geschnittenes Gras, Heu oder Stroh vom Boden aufsammeln und in Schwaden ablegen können. Anders als bei Rechkreiselschwadern wird dabei das Erntegut nicht direkt auf dem Boden liegend zu einem Schwad zusammengerecht, sondern zunächst vom Boden aufgesammelt und erst sodann quergefördert, um in einem Schwad abgelegt zu werden. Solche Merger zeichnen sich durch eine hohe Futter- bzw. Erntegutqualität aus, da Verunreinigungen wie Steine oder Erdklumpen weniger leicht in den Schwad gelangen, wenn das Erntegut vor dem Querfördern zunächst vom Boden angehoben wird.

Der Aufsammelförderer kann dabei ein Zinkenförderer mit umlaufend antreibbaren Förderzinken sein, insbesondere in Form einer sog. Pickup, bei der Förderzinken zwischen Abstreiferblechen hervorstehen und auf ringförmigen Umlaufbahnen in aufrechten Umlaufebenen angetrieben werden. Der Querförderer solcher Merger ist hingegen üblicherweise als Umlaufförderer mit einem endlos umlaufenden Förderband ausgebildet, vgl. beispielsweise DE 10 2010 010 862 A1. Anstelle eines endlos umlaufenden Förderbands kann auch ein Förderboden vorgesehen sein, über den separate Förderwerkzeuge in Querförderrichtung hinwegstreichen, vgl. EP 0 255 458.

Bei der DE 20 2010 010 038 U1 übergibt die Stachelwalze das aufgesammelte Erntegut an das Querförderband des Mergers über einen zwischengeschalteten Rotor. Dabei ist die Stachelwalze segmentiert und durch Kardangelenke abschnittsweise knickbar, wobei die sich durch das segmentweise Abknicken der Stachelwalze ergebenden Höhenunterschiede zum Querförderband durch den zwischengeschalteten Rotor ausgeglichen werden. Die Schrift EP 1 593 294 A1 zeigt eine Mähmaschine, bei der die Mähwerkstrommel über eine sich gegenläufig verschränkenden Lenkeranordnung aufgehängt ist.

Solche bislang bekannten Merger sind jedoch in verschiedener Hinsicht nachteilig. Zum einen sind die Mergereinheiten recht sperrig und platzgreifend, da der Anbaurahmen zur Lagerung des Querförderers um den Querförderer herumgeführt, um den Futterstrom auf dem Förderband nicht zu behindern, was zu einer sperrigen Baugröße weiter beiträgt.

Zum anderen ist die Bodenanpassung solcher Merger bei stark kupiertem, welligem Gelände bislang begrenzt. Der Merger kann zwar grundsätzlich durch das auf die Dreipunktanlenkung wirkende Hubwerk des Schleppers angehoben bzw. abgesenkt werden, dies ist jedoch nicht ausreichend bzw. ungeeignet, um eine Bodenanpassung in ausreichender Geschwindigkeit und mit ausreichender Präzision zu erreichen, so daß häufig die Zinken der PickUp des Aufsammelförderers in den Boden stechen, wenn auf eine Bodenwelle aufgefahren wird, bzw. Erntegut am Boden liegenbleibt, wenn über eine Quersenke hinweggefahren wird, in die der Aufsammelförderer nicht rasch genug einauchen kann. Dabei wird die Bodenanpassung an solche Querwellen auch durch den Querförderer behindert, insbesondere wenn dieser eine größere Breite und damit Länge in Fahrtrichtung besitzt, um den nötigen Volumenstrom querfördern zu können. Hierdurch kann bei stärkeren Bodenkrümmungen bzw. stärker abfallenden oder ansteigenden Bodenwellen der Querförderer am Boden aufsitzen und dadurch verhindern, dass der Aufsammelförderer tief genug in die Welle eintaucht, um das dort liegende Erntegut aufzusammeln.

Der vorliegenden Erfindung liegt hiervon ausgehend die Aufgabe zugrunde, eine verbesserte Heuwerbungsmaschine der genannten Art zu schaffen, die Nachteile des Standes der Technik vermeidet und Letzteren in vorteilhafter Weise weiterbildet. Insbesondere soll eine sich besser an das Bodenprofil anpassende Mergereinheit geschaffen werden, die das Erntegut auch bei stark welligem Gelände sauber und vollständig vom Boden aufsammelt, ohne in den Boden einzustechen.

Erfindungsgemäß wird die genannte Aufgabe durch eine Heuwerbungsmaschine gemäß Anspruch 1 gelöst. Bevorzugte Ausgestaltungen der Erfindung sind Gegenstand der abhängigen Ansprüche.

Es wir also vorgeschlagen, die zumindest eine Mergereinheit gegenüber dem Anbaurahmenteil, das am Schlepper anhebbar und absenkbar angebaut werden kann, mittels einer Lenkeranordnung schwimmend auf- und abbewegbar und dabei hinsichtlich des Kippwinkels der Mergereinheit gesteuert aufzuhängen, so daß die Mergereinheit auch ohne Auf- und Abbewegen des genannten Anbaurahmenteils vom Schlepper her sich selbst unter Bewegung der Lenkeranordnung rasch an den Boden anpassen kann. Erfindungsgemäß umfasst der Anbaurahmen der Mergereinheit zumindest einen ersten Lenker, der an einem über eine Dreipunktanlenkung an den Schlepper anbaubaren Anbaurahmenteil angelenkt ist und von diesem näherungsweise fahrtrichtungsparallel ausgerichtet auskragt, sowie zumindest einen zweiten und dritten Lenker, die jeweils einerseits gelenkig an dem ersten Lenker und andererseits gelenkig an der Mergereinheit oder einem mit der Mergereinheit verbundenen Mergertragrahmenteil angelenkt sind, so dass die Mergereinheit von dem zweiten und dritten Lenker nach Art eines Viergelenks an dem ersten Lenker aufgehängt und auf und ab bewegbar ist. Durch Auf- und Abwippen der zweiten und dritten Lenker kann die Mergereinheit leichtfüßig über Bodenwellen hinwegschweben, wobei die Mergereinheit von den Lenkern in einer geigneten Kippwinkellage geführt ist.

Die Gelenkachsen der zweiten und dritten Lenker relativ zum ersten Lenker und relativ zur Mergereinheit können sich dabei etwa parallel zueinander erstrecken und/oder etwa liegend quer zur Fahrtrichtung ausgerichtet sein, so daß die Lenker um die genannten liegenden Querachsen auf- und niederwippen können.

Vorteilhafterweise kann auch der erste Lenker selbst, an dem der zweite und dritte Lenker jeweils schwenkbar angelenkt ist, schwenkbar gelagert sein, wobei vorteilhafterweise eine liegend quer zur Fahrtrichtung verlaufende Schwenkachse für den ersten Lenker vorgesehen sein kann, so daß der erste Lenker relativ zu dem durch die Dreipunktanlenkung an den Schlepper anbaubaren Anbaurahmenteil auf- und niederwippen kann. Hierdurch kann eine Bodenanpassung einerseits durch eine Schwenkbewegung der Mergereinheit relativ zu dem ersten Lenker erfolgen, die von den parallelogrammartig wirkenden, das Viergelenk bildenden zweiten und dritten Lenkern geführt wird, die schwenkbar an dem ersten Lenker angelenkt sind. Andererseits kann eine Bodenanpassung zusätzlich dadurch erfolgen, dass der erste Lenker zusammen mit den daran angelenkten zweiten und dritten Lenkern und der wiederum daran angelenkten Mergereinheit an dem Anbaurahmenteil, das am Schlepper anhebbar und absenkbar angebaut ist, auf- und abschwenkt.

Die gesamte Bodenanpass-Bewegung sowie der gesamte Neigungswinkel der Mergereinheit und deren Aufsammel- und Querförderer ergibt sich aus der Summe bzw. Differenz der Bewegungen des ersten Lenkers relativ zum Anbaubock und der zweiten und dritten Lenker relativ zum ersten Lenker sowie der entsprechenden Schwenkwinkel. Durch die zusätzliche Beweglichkeit des ersten, vom Anbaubock auskragenden Lenkers, ist die Bodenanpassung weniger eingeschränkt. Selbst wenn die beiden am ersten Lenker angelenkten Lenker des Viergelenks die Grenzen ihres Bewegungsbereiches erreichen, kann eine weitere Bewegung der Mergereineheit beispielsweise nach oben dadurch erfolgen, dass sich der erste Lenker zusätzlich weiter bewegt. Zudem erlaubt der zusätzliche Freiheitsgrad der Aufhängungsvorrichtung eine bessere Abstimmung des Ansprechverhaltens an verschiedene Bodenkonturen.

Um ein leichtfüssiges Hinwegschweben der Mergreinheit über Bodenunebenheiten zu ermöglichen, kann in Weiterbildung der Erfindung eine Gewichtsentlastungseinrichtung zur zumindest teilweisen Aufnahme des Gewichts der Mergereinheit vorgesehen sein.

Die Gewichtsentlastungseinrichtung kann eine Feder aufweisen, die einerseits an der Mergereinheit und/oder dem zweiten oder dritten Lenker und andererseits an dem vom Schlepper aushebbaren Anbaurahmenteil angreift.

Alternativ oder zusätzlich kann die Entlastungsfedereinrichtung eine erste Feder besitzen, die einerseits an der Mergereinheit und/oder am zweiten bzw. dritten Lenker und andererseits am ersten Lenker angreift, und weiterhin eine zweite Feder besitzen, die einerseits am ersten Lenker und andererseits am Anbaurahmenteil angreift.

Die genannte zumindest eine Feder kann dabei eine mechanische Feder bspw. in Form einer Spiralfeder sein, oder auch als Druckmittelfeder bspw. in Form eines aus einem Druckspeicher druckvorgespannten Druckmittelzylinder ausgebildet sein.

Die genannte Viergelenks-Lenkeranordnung kann direkt an der Mergereinheit, insbesondere an einem Mergerchassisteil angelenkt sein, insbesondere dann, wenn der Querförderer als Querförderschnecke ausgebildet ist. Ein solcher Schneckenförderer kann im Vergleich zu einem Bandförderer deutlich kleiner bauen und kompakter ausgebildet sein und dabei dennoch das notwendige Erntegutvolumen bewältigen. Zum anderen ist der Schneckenförderer hinsichtlich der Übergabe des Ernteguts vom Aufsammelförderer her deutlich unkritischer, insbesondere braucht der Aufsammelförderer - was gleichwohl möglich wäre - das Erntegut nicht von oben her auf den Querförderer ablegen, wie dies bei einem Förderband notwendig ist, so dass ein Querförderer in Form eines Schneckenförderers hinsichtlich seiner Abwurfhöhe deutlich flexibler positionierbar ist. Insbesondere kann die Baulänge in Fahrtrichtung reduziert und damit die Mergereinheit näher am Schlepper positioniert werden.

In Weiterbildung der Erfindung ist die genannte Förderschnecke von einem Schneckengehäuse eingefasst, das die Förderschnecke umfangsseitig über ein Segment von zumindest π/4 umgeben kann, so dass zwischen dem Schneckengehäuse und der Förderschnecke ein Förderraum gebildet wird, durch den das Erntegut unter Drehung der Förderschnecke axial gefördert wird. Vorteilhafterweise kann sich das Schneckengehäuse dabei zumindest an einer Unterseite der Schnecke und einer in Fahrtrichtung betrachtet Hinterseite der Schnecke erstrecken und/oder einen Boden und eine Rückwand bilden, die das Herausfallen des Ernteguts verhindert. Das Schneckengehäuse kann sich aber auch um einen größeren Umfangssektor um die Förderschnecke herum erstrecken, beispielsweise über einen Sektor von π/2 oder mehr oder auch einen Sektor von π oder größer.

Vorteilhafterweise kann das genannte Schneckengehäuse mit einem Bodenabschnitt bis unter einen Ablagebereich des Aufsammelförderers geführt sein und/oder eine an den Aufsammelförderer angrenzende und/oder angeschlossene Sammelwanne bilden. Durch eine solche wannenförmige Ausbildung des Schneckengehäuses kann sichergestellt werden, dass das vom Aufsammelförderer abgelegte Erntegut vollständig vom Schneckenförderer erfasst wird.

Vorteilhafterweise kann die Mergereinheit an dem Schneckengehäuse aufgehängt bzw. gelagert sein, das gleichzeitig ein Chassis bilden kann, an dem auch der Aufsammelförderer gelagert sein kann. Dabei kann sich das genannte Schneckengehäuse um die Förderschnecke herum erstrecken, so daß ein oberhalb der Förderschnecke liegender Gehäuse- bzw. Chassisabschnitt als Lagerabschnitt dienen kann, an dem die Mergereinheit an der genannten Viergelenks-Lenkeranordnung gelagert bzw. aufgehängt sein kann. Gleichwohl ist es alternativ oder zusätzlich ebenfalls möglich, die Mergereinheit an einem anderen Schneckengehäuseabschnitt oder auch einem anderen Strukturteil des Querförderers und/oder Aufsammelförderers zu lagern.

Gleichwohl kann die Mergereinheit mittels der oben genannten Lenkeranordnung auch dann aufgehängt werden, wenn als Querförderer kein Schneckenförderer, sondern ein Umlaufförderer mit einem endlos umlaufenden Fördermittel, beispielsweise ein Förderband vorgesehen ist. Ist als Querförderer ein solcher Umlaufförderer vorgesehen, kann die Lenkeranordnung an einem Strukturteil des Umlaufförderers oder allgemein an einem Mergertragrahmenteil angelenkt sein, welches die Mergereinheit, insbesondere deren Querförderer trägt.

In vorteilhafter Weiterbildung der Erfindung kann als Mergertragrahmenteil beispielsweise ein zwischen das Obertrumm und das Untertrumm des umlaufenden, endlosen Fördermittels greifendes Trägerteil vorgesehen sein, das beispielsweise nach Art von Gabelstaplerzinken einen vorspringenden, zwischen das Obertrumm und Untertrumm greifendes Tragteil und ein hierzu beispielsweise L-förmig abgeknicktes Aufhängungsteil umfassen kann.

Alternativ oder zusätzlich zu einem solchen zwischen das Obertrumm und Untertrumm greifenden Tragrahmenteil kann das Mergertragrahmenteil auch ein sich über dem Querförderer erstreckende Trägerbrücke umfassen, an der der Querförderer mittels Aufhängungsgabeln aufgehängt sein kann, um den Erntegutstrom nicht zu behindern. Beispielsweise können die genannten Aufhängungsgabeln nach Art eines Torbogens oder eines gestürzten Us an den Umlenkrollen beziehungsweise deren Achsen an den Enden des Querförderbands oder auch an Stützrollen die weiter zur Mitte hin angeordnet sind, angreifen.

An der genannten Querträgerbrücke können die vorgenannten zweiten und dritten Lenker umliegende, quer zur Fahrtrichtung weisende Gelenkachsen schwenkbar angelenkt sein, um das zuvor erläuterte Auf- und Niederwippen der Lenkeranordnung zu ermöglichen.

Grundsätzlich wäre es möglich, dass die Bewegungen der vorgenannten zweiten und dritten Lenker einerseits und des ersten Lenkers andererseits voneinander entkoppelt sind. Hierdurch wäre es möglich, unterschiedliche Ansprechverhalten für unterschiedliche Bodenkonturen zu erreichen. Beispielsweise wäre es möglich, dass auf kleine Bodenwellen über Bewegungen des Viergelenks ein rasches Ansprechen sichergestellt ist, während für längere und höhere Bodenwellen eine Bewegung des ersten Lenkers ggf. zusätzlich zu einer Bewegung der zweiten und dritten Lenker erfolgt.

In Weiterbildung der Erfindung kann die Bewegung des ersten Lenkers auch in Abhängigkeit der Bewegung der zweiten und dritten Lenker gesteuert werden. Insbesondere kann eine Steuervorrichtung vorgesehen sein, die die Schwenkstellung des ersten Lenkers relativ zu dem Anbaurahmenteil, das vom Schlepper aushebbar ist, in Abhängigkeit der Stellung der Mergereinheit relativ zum ersten Lenker steuert. Bewegt sich die Mergereinheit bzw. das damit verbundene Mergertragrahmenteil über das Viergelenk relativ zum ersten Lenker, wird auch dieser entsprechend bewegt.

Die genannte Steuervorrichtung kann grundsätzlich verschieden ausgebildet sein. Nach einer vorteilhaften Ausführung der Erfindung ist die Steuervorrichtung derart ausgebildet, dass der erste Lenker einerseits und die zweiten und dritten Lenker andererseits gegenläufig schwenken.

Insbesondere kann die Steuervorrichtung von einem vierten Lenker gebildet sein, der einerseits gelenkig an dem Anbaurahmenteil, das vom Schlepper aushebbar ist, und andererseits gelenkig an dem zweiten und/oder dritten Lenker angelenkt ist. Die Steuervorrichtung kann also als Zwangssteuerung ausgebildet sind, durch die eine Bewegung des Maschinenrahmens bzw. des Viergelenks relativ zum ersten Lenker zwangsweise eine Bewegung des besagten ersten Lenkers bewirkt. Der genannte vierte Lenker kann dabei auch als längenveränderlicher Lenker in Form eines Dämpfers und/oder Stellaktors ausgebildet sein, beispielswesie in Form eines teleskopierbaren Dämpfer- oder Stellaktorbeins, oder längsverschieblich bspw. in einem Langloch gelagert sein und/oder feder- oder druckvorgespannt sein, um ein gewisses Spiel bzw. eine dämpfende Wirkung oder eine Einstellmöglichkeit für die Steuerung der Bewegung des ersten Lenkers in Abhängigkeit der Bewegung der zweiten und/oder dritten Lenker zu errreichen.

Die Hebelverhältnisse des die Zwangssteuerung bewirkenden vierten Lenkers können an die gewünschte Bewegungscharakteristik angepasst sein. Nach einer bevorzugten Ausführung der Erfindung liegt der Anlenkpunkt des zweiten bzw. dritten Lenkers an dem ersten Lenker zwischen dem Anlenkpunkt des Mergertragrahmenteils an diesem Lenker und dem Anlenkpunkt des vierten Lenkers an dem genannten zweiten oder dritten Lenker. Hierdurch wird eine gegenläufige Schwenkbewegung des Viergelenks und des ersten Lenkers erzeugt.

Vorzugsweise sind die Übersetzungsverhältnisse der Steuervorrichtung derart getroffen, dass bei einer größeren Schwenkbewegung des Viergelenks über einen größeren Schwenkwinkel eine kleinere Schwenkbewegung des ersten Lenkers über einen entsprechend kleineren Schwenkwinkel erfolgt. Dies kann dadurch erreicht werden, dass der Anlenkpunkt des vierten Lenkers näher am Drehpunkt des zweiten bzw. dritten Lenkers als der Anlenkpunkt des Mergertragrahmenteils liegt. Insbesondere kann der Abstand zwischen dem Drehpunkt des zweiten bzw. dritten Lenkers vom Anlenkpunkt des vierten Lenkers weniger als halb so groß wie der Abstand des Drehpunkts des zweiten bzw. dritten Lenkers vom Anlenkpunkt des Maschinenrahmens an diesem Lenker sein.

Um eine Voreinstellung bzw. eine Änderung der Grundeinstellung vorsehen zu können, kann der vierte Lenker längenveränderlich sein. Dies kann einerseits dadurch erreicht werden, dass der Lenker teleskopierbar ausgebildet ist. Anstelle einer unmittelbaren Längenänderung des vierten Lenkers selbst könnte auch vorgesehen sein, dass dieser über Langlöcher am Anbaubock oder dem Viergelenk geführt ist, so dass sich nur die effektive Länge, nicht jedoch die Länge des Lenkers selbst ändert. Vorzugsweise erfolgt eine entsprechende Vorspannung in eine Ausgangsstellung. Es kann auch eine veränderliche Fixierung in eine gewünschte Längeneinstellung vorgesehen sein.

Anstelle einer Zwangssteuerung durch einen vierten Lenker kann auch eine Kolbenzylindereinheit vorgesehen sein, die einerseits gelenkig an dem ersten Lenker und andererseits gelenkig an dem Anbaubock angelenkt ist. Um die durch die Kolbenzylindereinheit bewirkten Bewegungen des ersten Lenkers auf die Bewegungen des zweiten und dritten Lenkers abstimmen zu können, kann die Steuervorrichtung weiterhin einen Abstandsmesser zur Messung des Abstands der Mergereinheit bzw. vom ersten Lenker aufweisen. Alternativ oder zusätzlich kann ein Neigungsmesser vorgesehen sein, der die Neigung des zweiten und/oder des dritten Lenkers gegenüber dem ersten Lenker bestimmt. Die Steuervorrichtung kann die Kolbenzylindereinheit in Abhängigkeit des Signals des Abstandsmessers und/oder des Signals des Neigungsmessers ansteuern, so dass der erste Lenker in Abhängigkeit des Abstands der Mergereinheit vom ersten Lenker und/oder der Neigung der Lenker des Viergelenks bewegt wird.

Vorteilhafterweise besitzt die Steuervorrichtung einen Bewegungsdämpfer, so dass Bewegungen des Viergelenks gedämpft in Bewegungen des ersten Lenkers umgesetzt werden. Sofern eine Zwangssteuerung durch den zuvor genannten vierten Lenker vorgesehen ist, kann der Bewegungsdämpfer diesem vierten Lenker zugeordnet sein, insbesondere dann, wenn der vierte Lenker längenveränderlich ausgebildet ist. Der Bewegungsdämpfer dämpft vorzugsweise die Veränderungen der Länge des besagten vierten Lenkers.

Ist eine Kolbenzylindereinheit zur Bewegung des ersten Lenkers vorgesehen, kann der Dämpfer dieser Kolbenzylindereinheit zugeordnet sein. Nach einer Ausführung der Erfindung kann die Dämpfung durch geeignete Wahl des die Kolbenzylindereinheit beaufschlagenden Fluids bewirkt werden.

In Weiterbildung der Erfindung erlaubt die Anlenkvorrichtung auch Schwenkbewegungen der Mergereinheit relativ zum Viergelenk, insbesondere um eine Queranpassung der Mergereinheit bzw. deren Aufsammelförderer an schräge Bodenkonturen zu erlauben. Insbesondere kann die Aufhängung der Mergereinheit an dem Viergelenk Schwenkbewegungen der Mergereinheit um eine in Fahrtrichtung verlaufende Schwenkachse erlauben. Zusätzlich oder alternativ kann die Aufhängung auch Schwenkbewegungen der Mergereinheit relativ zu dem Viergelenk um eine quer zur Fahrtrichtung verlaufende Achse erlauben, so dass die Mergereinheit begrenzt nach vorne bzw. hinten kippen kann, um eine ganz feine Bodenanpassung an Querwellen zu gestatten. Die zusätzlichen Schwenkfreiheitsgrade können dadurch erreicht werden, dass die zweiten und dritten Lenker mit der Mergereinheit bzw. dem damit verbundenen Mergertragrahmenteil über Kugelgelenke verbunden sind. Alternativ können die Anlenkpunkte des Mergertragrahmenteils an dem zweiten und/oder dritten Lenker in Längsnuten geführt sein.

In Weiterbildung der Erfindung kann vorgesehen sein, dass der zweite und/oder der dritte Lenker längenveränderbar, insbesondere teleskopierbar, ausgebildet ist. Auch hierdurch kann eine zusätzliche Pendelbewegung der Mergereinheit und nach vorne bzw. hinten erreicht werden. Der zweite und/oder dritte Lenker kann als Kolbenzylindereinheit ausgebildet sein, die fremdenergiebetätigt werden kann.

In Weiterbildung der Erfindung erstrecken sich der zweite und der dritte Lenker einerseits und der erste Lenker andererseits zueinander gegenläufig. Ist die Mergereinheit frontangebaut, können sich der zweite und der dritte Lenker jeweils von ihren Anlenkpunkten am ersten Lenker nach hinten zu dem am Schlepper anbaubaren Anbaurahmenteil hin erstrecken, während sich der erste Lenker vom genannten Anbaurahmenteil nach vorne auskragend erstrecken kann. Das genannte Anbaurahmenteil kann dabei ein Anbaubock sein, der über Ober- und Unterlenker am Schlepper angebaut werden kann. Die Mergereinheit kann dabei sozusagen nachlaufend an dem nach vorne auskragenden freien Ende des ersten Lenkers angeordnet sein. Der Querförderer kann dabei zwischen dem auskragenden Ende des ersten Lenkers und dem Anbaubock angeordnet sein, insbesondere wenn der Querförderer als Querförderschnecke ausgebildet ist, so daß der erste Lenker nicht mit dem Querförderband und dem darauf geförderten Erntegut kollidieren kann. Hierdurch wird eine kompakte Anordnung der Aufhängungsvorrichtung erreicht.

Ist die Heuwerbungsmaschine heckangebaut, kann die vorgenannte Anordnung entsprechend orientiert oder auch umgekehrt getroffen sein. Dabei können sich der zweite und der dritte Lenker jeweils von ihren Anlenkpunkten am ersten Lenker nach vorne zu dem am Schlepper anbaubaren Anbaurahmenteil hin erstrecken, während sich der erste Lenker vom genannten Anbaurahmenteil nach hinten auskragend erstrecken kann. Das genannte Anbaurahmenteil kann dabei ein Anbaubock, der über Ober- und Unterlenker am Schlepper angebaut werden kann, oder ein Querträger eines heckseitig anbaubaren Maschinenrahmens sein, wie er bei Schmetterlingsanbaugeräten verwendet werden kann und für ein seitlich auskragendes Anbauen des Mergers verwendet werden kann.

Die Neigung des zweiten und dritten Lenkers zueinander sowie das Längenverhältnis dieser beiden Lenker sind derart getroffen, dass beim Nachoben- bzw. Nachuntenschwenken der Mergereinheit diese die gewünschte Änderung des Anstellwinkels ausführt, wobei gleichzeitig die Winkeländerung des ersten Lenkers berücksichtigt wird. Nach einer bevorzugten Ausführung der Erfindung können die zweiten und dritten Lenker im gesamten vorgesehenen Arbeitsbereich bezüglich ihrer Längsachsen im wesentlichen parallel zueinander angeordnet sein. Vorzugsweise weisen sie einen Winkelversatz zueinander von weniger als 20° auf.

In Weiterbildung der Erfindung ist der erste, vom Anbaubock auskragende Lenker wesentlich länger als der zweite Lenker oder der dritte Lenker. Vorzugsweise besitzen der zweite und/oder der dritte Lenker eine Länge, die weniger als 75 %, vorzugsweise weniger als 50 % der Länge des ersten Lenkers beträgt.

Vorteilhafterweise kann die Mergereinheit auch unabhängig von der Hubvorrichtung des Schleppers angehoben und abgesenkt werden. Es kann hierzu ein Kraftheber zum Anheben der Heuwerbungsmaschine relativ zum Anbaubock vorgesehen sein. Vorteilhafterweise ist der Kraftheber einerseits an der Mergereinheit und andererseits an dem ersten Lenker oder unmittelbar am Anbaubock angelenkt. Der Kraftheber ist vorzugsweise fremdkraftbetätigt, insbesondere eine druckbetätigte Kolbenzylindereinheit.

Die Heuwerbungsmaschine kann dabei mehrere Mergereinheiten umfassen, die auf die Frontseite und die Heckseite des Schleppers aufgeteilt sein können, so dass die Mergereinheiten ohne gegenseitige Behinderung und Kollisionsproblematik noch variabler positioniert werden können. Dabei kann zumindest ein Frontmerger in der Fahrspur des Schleppers positionierbar und zumindest ein Heckmerger quer zur Fahrtrichtung zum Frontmerger versetzt positionierbar angeordnet sein. Durch den zumindest einen in der Fahrspur des Schleppers laufenden Frontmerger kann das Erntegut vor einem Überfahren durch den Schlepper bewahrt werden, so dass eine schonende Futterverarbeitung ermöglicht ist. Zum anderen kann der Versatz des Heckmergers zum Frontmerger aufgrund der Anordnung an verschiedenen Schlepperenden, d.h. Front und Heck, einfach und ohne Kollisionsproblematik zwischen den Mergereinheiten für die jeweilige Schwadaufgabe passend gewählt werden.

Die Erfindung wird nachfolgend anhand bevorzugter Ausführungsbeispiele und zugehöriger Zeichnungen näher erläutert. In den Zeichnungen zeigen:
- Fig. 1:: eine schematische Draufsicht auf eine Heuwerbungsmaschine nach einer vorteilhaften Ausführung der Erfindung mit Front- und Heckmergern, die jeweils einen Aufsammelförderer in Form einer Pick-Up mit umlaufenden Förderzinken oder -stacheln und einen daran anschließenden Querförderer in Form eines Schneckenförderers aufweisen,
- Fig. 2:: eine Frontansicht einer Mergereinheit der Heuwerbungsmaschine aus Fig. 1, die den Aufsammelförderer und den nachgeordneten Querförderer in Form des Schneckenförderers zeigt, wobei der Schneckenförderer oberhalb des Aufsammelförderers angeordnet gezeigt ist,
- Fig. 3:: eine Schnittansicht der Mergereinheit entlang der Linie A-A in Fig. 2, die die Anordnung von Schneckenförderer und Aufsammelförderer relativ zueinander und die Anbindung des Schneckengehäuses an den Aufsammelförderer zeigt,
- Fig. 4:: eine Seitenansicht der Mergers aus den vorhergehenden Figuren, und
- Fig. 5:: eine vergrößerte Seitenansicht des Anbaurahmens der Mergereinheit aus den vorhergehenden Figuren und desses Lenkeranordnung,
- Fig. 6:: eine perspektivische Ansicht des Anbaurahmens aus der vorhergehenden Figur,
- Fig. 7:: eine Seitenansicht der Mergereinheit ähnlich Fig. 4 beim Einfahren in eine Bodensenke,
- Fig. 8:: eine Seitenansicht einer Mergereinheit ähnlich Fig. 4, wobei die Mergereinheit als Querförderer keine Querförderschnecke, sondern ein Querförderband aufweist und an die Lenkeranordnung mittels einer zwischen das Obertrumm und das Untertrumm des Querförderbands greifenden Aufhängung an der Lenkeranordnung angelenkt ist, wobei die Lenkeranordnung gegenüber der Variante nach Fig. 4 einen Freiheitsgrad zusätzlich aufweist,
- Fig. 9:: eine schematische Seitenansicht der Aufhängung des Querförderbands aus Fig. 8,
- Fig. 10:: eine schematische Seitenansicht der Aufhängung des Querförderbands nach einer alternativen Ausführung, wobei ein gabelförmiges, torbogenartiges Aufhängungsteil an die Umlenkrollen des Querförderbands greift,
- Fig. 11:: eine schematische Frontansicht der Aufhängung des Querförderbands gemäß der Variante nach Fig. 9, bei der das Aufhängungsteil mit gabelstaplerartigen Trägerzinken zwischen das Obertrumm und das Untertrumm etwa in der Mitte des Querförderbands angreift, und
- Fig. 12:: eine schematische Frontansicht der Querförderbandaufhängung aus Fig. 10, bei der torbogenförmige Aufhängungsgabeln an den Umlenkrollen am Ende des Förderbands angreifen.

Wie die Figuren zeigen, kann die Heuwerbungsmaschine 1 als Anbaugerät ausgebildet sein, das an einen Schlepper 2 anbaubar ist. Die Heuwerbungsmaschine 1 kann dabei mehrere Mergereinheiten 3 umfassen, die jeweils einen Aufsammelförderer 4, der am Boden liegendes Erntegut aufsammelt und an einen Querförderer 5 übergibt, der das aufgesammelte Erntegut quer zur Fahrtrichtung 6 fördert und in Schwaden 7 wieder am Boden ablegt.

Die genannten Mergereinheiten 3 sind dabei insgesamt betrachtet liegend ausgerichtet und erstrecken sich mit ihrer länglichen Kontur quer zur genannten Fahrtrichtung 6. Der genannte Aufsammelförderer 4 kann dabei einen Stachelrotor umfassen, der um eine liegende Querachse rotatorisch antreibbar ist, wobei die Stacheln entlang der Umlaufbahn gesteuert oder auch ungesteuert sein können, wie dies bei Pickups an sich bekannt ist.

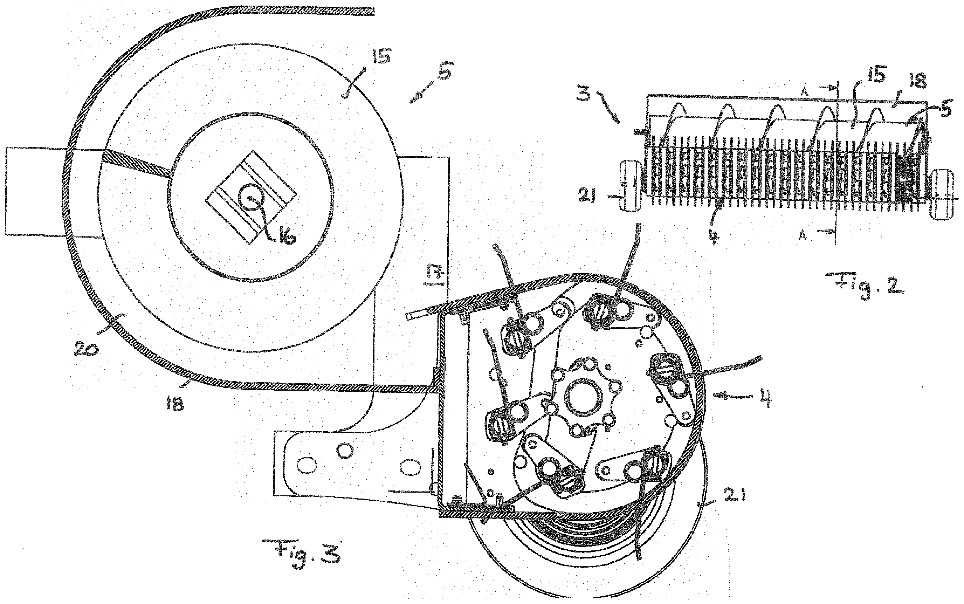

Der dem genannten Aufsammelförderer 4 nachlaufende Querförderer 5 kann als Schneckenförderer ausgebildet sein und eine Querförderschnecke 15 besitzen, die das aufgesammelte Erntegut querfördert und in einem Schwad ablegt, vgl. Fig. 2 und 3.

Die genannte Förderschnecke 15 ist dabei liegend quer zur Fahrtrichtung 6 ausgerichtet und ist um die entsprechend ausgerichtete Schneckendrehachse 16 rotatorisch antreibbar. Ein nicht eigens dargestellter Drehantrieb kann beispielsweise einen Elektromotor umfassen oder durch einen Antriebsstrang an eine Schlepperzapfwelle anschließbar sein.

Die Förderschnecke 15 ist dabei vorteilhafterweise unmittelbar stromab des Förderwegs des Aufsammelförderers 4 angeordnet, so dass das Erntegut vom Aufsammelförderer 4 direkt an den Schneckenförderer übergeben werden kann, ohne dass zusätzliche Übergabeförderer zwischengeschaltet werden müssten. Die Förderschnecke 15 kann hierbei parallel zur Längserstreckungsachse des Aufsammelförderers 4, beispielsweise parallel zu dessen Stachelwalzenachse angeordnet sein.

Wie die Figuren 2 und 3 zeigen, kann die Förderschnecke 15 hierbei oberhalb des Aufsammelförderers 4 angeordnet sein, wobei beispielsweise ein unteres Drittel der Förderschnecke 15 im Höhenbereich des Ablagebereichs 17 des Aufsammelförderers angeordnet sein kann. Die Schneckendrehachse 16 kann oberhalb der Oberseite des Aufsammelförderers 4 liegen, vgl. Fig. 3.

Vorteilhafterweise ist die Förderschnecke 15 des Schneckenförderers von einem Schneckengehäuse 18 umfangsseitig eingefasst, so dass zwischen dem Schneckengehäuse 18 und der Förderschnecke 15 ein umfangsseitig geschlossener Förderraum geschaffen ist. Das Schneckengehäuse 18 kann hierbei insbesondere eine Unterseite und eine vom Aufsammelförderer 4 abgewandte Rückseite und ggf. auch eine Oberseite der Förderschnecke 15 einfassen, während die dem Aufsammelförderer 4 zugewandte Vorderseite der Förderschnecke 15 offen bleibt, vgl. Fig. 3.

Das Schneckengehäuse 18 kann hierbei eine an den Aufsammelförderer 4 angeschlossene Sammelwanne bilden, die den Ablagebereich 17 des Aufsammelförderers 4 untergreift.

Insbesondere kann das Schneckengehäuse 18 ein Chassis bilden, an dem der Schneckenförderer und der Aufsammelförderer 4 gelagert sind und an dem die gesamte Mergereinheit aufgehängt sein kann, wobei die Aufhängung beispielsweise an dem Schneckengehäuseabschnitt oberhalb der Förderschnecke 15 erfolgen kann, wie noch erläutert wird.

Vorteilhafterweise kann bei einer solchen Ausbildung das Schneckengehäuse 18 mit seiner Bodenseite einen Gleitteller und/oder eine Gleitkufe 19 bilden, der als Bodentaster fungiert.

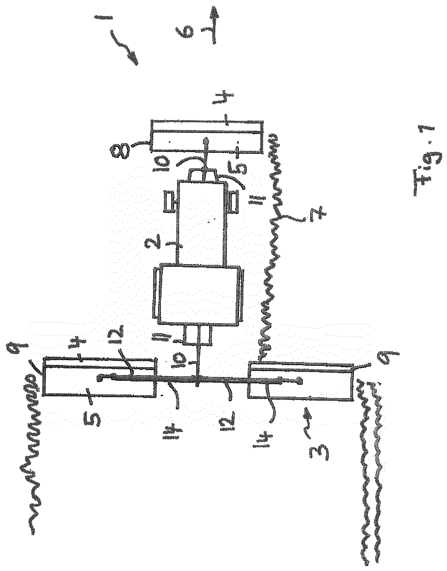

Wie Figur 1 zeigt, können die vorgenannten Mergereinheiten 3 dabei in Frontmerger 8 und Heckmerger 9 aufgeteilt sein, die einerseits am Bug bzw. an der Front des Schleppers 2 angebaut und andererseits am Heck des Schleppers 2 angebaut werden können.

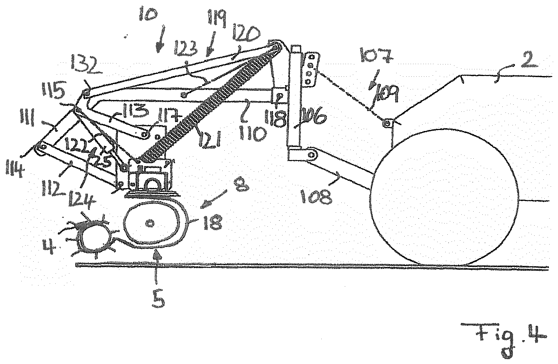

Zum Anbau an den Schlepper 2 sind hierbei jeweils Anbaurahmen 10 vorgesehen, die einerseits am Heck und andererseits an der Front des Schleppers 2 angebaut werden können, und zwar vorteilhafterweise mittels einer Anbauvorrichtung 11, die den Anbaurahmen 10 frei auskragend halten bzw. anheben und absenken kann, um die an dem Anbaurahmen 10 gelagerten Mergereinheiten 3 vom Boden ausheben oder schwebend über den Boden führen kann. Die genannte Anbauvorrichtung 11 kann hierbei vorteilhafterweise einen Anbaubock 106 umfassen, der mit einer Lenkeranordnung des Anbaurahmens 10 verbunden ist, sowie ferner eine Dreipunktanlenkung mit Ober- und Unterlenkern 109 und 108 aufweisen, die den genannten Anbaubock am Schlepper 2 anlenken, vgl. Fig. 4.

Der Frontmerger 8 kann am frontseitigen Anbaurahmen 10 aufgehängt sein, der durch eine Anbauvorrichtung 11 anhebbar und absenkbar am Schlepper 2 anbaubar sein, wobei auch hier die Anbauvorrichtung 11 einen rahmenseitigen Anbaubock 106 sowie eine Dreipunktanlenkung mit Ober- und Unterlenkern 109 und 108 umfassen kann, vgl. Fig. 4.

Wie Fig. 1 zeigt, kann der Heckmerger 9 quer bzw. seitlich vom Schlepper 2 auskragend vorgesehen sein. Hierzu kann der Anbaurahmen 10 einen seitlich auskragende Tragarm 12 umfassen, der an einem Zentralabschnitt des Anbaurahmens 10 angelenkt sein und von diesem quer auskragen kann. An besagtem Tragarm 12 ist die Mergereinheit 9 mittels der Lenkeranordnung aufgehängt.

Den Tragarmen 12 kann hierbei eine Gewichtsentlastungseinrichtung 14 zugeordnet sein, um die Heckmerger 9 leichtfüßig über den Boden führen zu können. Diese Gewichtsentlastungseinrichtung 14 kann beispielsweise eine Federeinrichtung umfassen oder einen Druckmittelzylinder aufweisen, der aus einem Druckspeicher heraus beaufschlagt sein kann.

Zur Aufhängung der Frontmergereinheit 8 an dem Anbaubock 106 beziehungsweise zur Anlenkung des genannten Heckmergers 9 an dem genannten Tragarm 12 ist jeweils eine Lenkeranordnung vorgesehen, wie sie aus den Fig. 4 bis 6 ersichtlich ist.

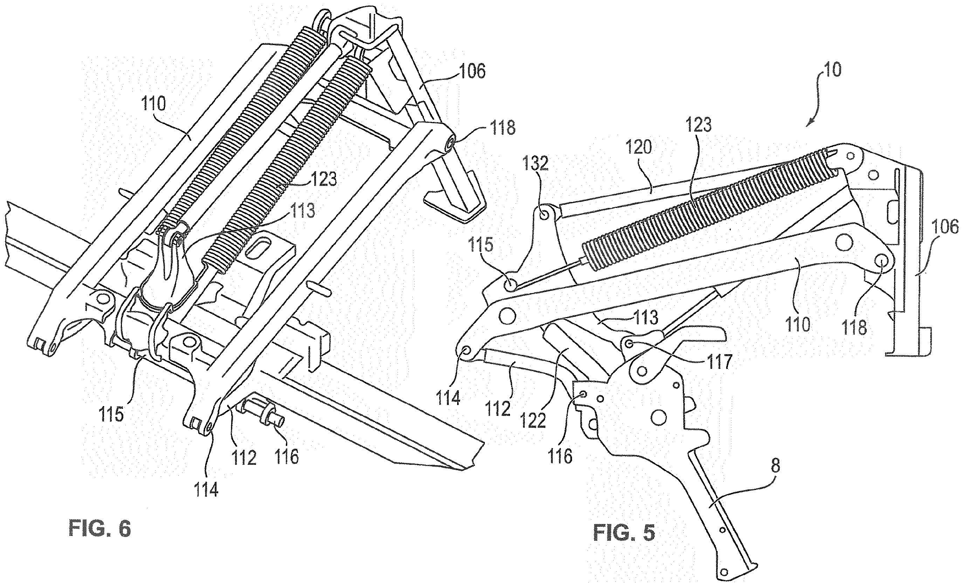

Die Lenkeranordnung umfasst einen ersten Lenker 110, der an dem Anbaubock 106 befestigt ist und von diesem grob gesprochen in Fahrtrichtung des Schleppers nach vorne auskragt. Die näherungsweise fahrtrichtungsparallele Ausrichtung des genannten ersten Lenkers 110 kann dabei mehr oder minder leicht spitzwinklig von der genannten Fahrtrichtung divergieren, wobei die Divergenz zur Fahrtrichtung von oben senkrecht zum Boden betrachtet vorteilhafterweise weniger als 30°, insbesondere weniger als 15° betragen kann. Die Divergenz quer zur Fahrtrichtung parallel zum Boden betrachtet variiert je nach Wippstellung, wie noch erläutert wird. Wie Figur 4 zeigt, erstreckt sich der erste Lenker 10 in der Betriebsstellung bei ebenem Gelände von dem Anbaubock 106 im wesentlichen waagrecht oder leicht abschüssig nach vorne. Der erste Lenker 110 besitzt dabei einen vorderen, nach unten abgekröpften Endabschnitt 111, an die der Mergereinheit 8 angelenkt ist. Wie Figur 1 zeigt, sind an dem vorderen Endabschnitt des ersten Lenkers 110 ein zweiter Lenker 112 sowie ein dritter Lenker 113 jeweils gelenkig angelenkt, und zwar jeweils um eine zur Fahrtrichtung sich quer erstreckende Achse 114 bzw. 115. Der zweite Lenker 112 sowie der dritte Lenker 113 erstrecken sich jeweils schräg nach hinten und unten zum Anbaubock 106 hin und sind mit ihren rückwärtigen Enden gelenkig mit dem Chassis der Mergereinheit verbunden, und zwar über ebenfalls quer zur Fahrtrichtung verlaufende Achsen 116 bzw. 117. Die zweiten und dritten Lenker 112 und 113 sind parallelogrammartig angeordnet und bilden ein Viergelenk, mit Hilfe dessen das vom Querschneckenförderer-Gehäuse gegliederte Chassis relativ zum ersten Lenker 110 beweglich gelagert sind. Wie Figur 5 zeigt, erstrecken sich die zweiten und dritten Lenker nur leicht geneigt zueinander, wobei der zweite Lenker 12 etwas länger ist als der dritte Lenker 13.

Wie Fig. 6 zeigt, kann der genannte erste Lenker 110 dabei auch von zwei Lenkerteilen gebildet sein beziehungsweise als Rahmenteil ausgebildet sein. Ebenso können die zweiten und dritten Lenker 112 und 113 jeweils von mehreren parallel angeordneten Lenkerteilen gebildet sein beziehungsweise in Form eines Lenkerrahmens ausgebildet sein, vgl. Fig. 6.

Es ist nicht nur das von den zweiten und dritten Lenkern 112 und 113 gebildete Viergelenk relativ zum ersten Lenker 110 schwenkbar. Zusätzlich ist der gesamte erste Lenker 110 zusammen mit dem daran angelenkten Viergelenk und dem wiederum daran angelenkten Merger schwenkbar, so dass er auf und ab wippen kann. Wie Figur 5 zeigt, ist der erste Lenker 110 um eine quer zur Fahrtrichtung, im wesentlichen horizontale Schwenkachse 118 schwenkbar an dem Anbaubock 106 angelenkt.

Die Schwenkbewegungen des Viergelenks, das von dem zweiten Lenker 112 und dem dritten Lenker 113 gebildet wird, und die Schwenkbewegung des ersten Lenkers 110 relativ zum Anbaubock 106 sind relativ zueinander zwangsgesteuert. Die entsprechende Steuervorrichtung 119 wird von einem vierten Lenker 120 gebildet, der einerseits gelenkig am Anbaubock 106 und andererseits gelenkig am dritten Lenker 113 angelenkt ist. Wie Figur 4 bis 6 zeigen, ist der dritte Lenker 113 als Kniehebel ausgebildet, der an seinem einen Ende mit dem Mergerchassis verbunden ist und an seinem anderen Ende mit dem vierten Lenker 120 verbunden ist, wobei der Drehpunkt 115 des dritten Lenkers 113 zwischen den Anlenkpunkten des vierten Lenkers 120 und des Mergerchassis im Bereich der Verbindung der beiden Schenkel des Kniehebels liegt. Der obere Schenkel, an dem der vierte Lenker 120 angelenkt ist, ist dabei wesentlich kürzer als der untere Schenkel, an dem das Mergerchassis angelenkt ist. In der gezeichneten Ausführung beträgt die Länge des oberen Schenkels nur etwa ein Viertel der Länge des unteren Schenkels. Es versteht sich jedoch, dass das Längenverhältnis verändert werden kann, um die gewünschten Hebelverhältnisse zu erzielen.

Zur Gewichtsentlastung ist eine Federeinrichtung 121 vorgesehen. In der gezeichneten Ausführungsform umfasst sie eine einzelne Feder bzw. mehrere parallel geschaltete Federn, die die Mergereinheit unmittelbar gegenüber dem Anbaubock 106 abspannen. Die Feder 121 greift einerseits am Gelenkpunkt des vierten Lenkers 120 am Anbaubock 106 und andererseits am Mergerchassis an.

Zusätzlich oder alternativ können auch eine Entlastungsfeder 123, die einerseits am Anbaubock 106, insbesondere am Anlenkpunkt des vierten Lenkers 120 daran, und andererseits an dem ersten Lenker 110 angreift, sowie eine Entlastungsfeder 122 vorgesehen sein, die einerseits am ersten Lenker 110, insbesondere am Anlenkpunkt des dritten Lenkers 113 daran, und andererseits am Mergerchassis angelenkt ist, vgl. Fig. 5. Die Entlastungsfedern 122 und 123 können auch als Kolbenzylindereinheiten ausgebildet sein. Sie können auch lediglich als Schwenkbegrenzer fungieren und in diesem Fall beispielsweise als Zugseil ausgebildet sein. Sie geben die maximal nach unten gehende Schwenkbewegung des ersten Lenkers bzw. des Viergelenks vor.

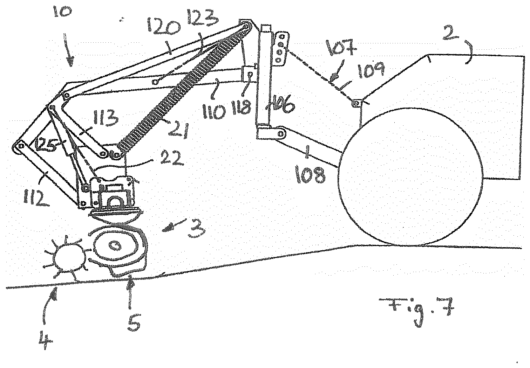

Die Federeinrichtung 121 bzw. 122, 123 wird vorteilhafterweise derart bemessen, dass der Merger mit nur geringem Gewicht auf den Boden drückt und somit leicht und rasch ansprechend jeglicher Bodenkontur folgt, d.h. über Bodenwellen auf und ab geht. Figur 7 zeigt, dass sich die Mergereinheit absenkt, sobald es in eine Senke im Boden fährt. Hierbei schwenken einerseits die zweiten und dritten Lenker 112 und 113 nach unten in eine steilere Stellung. Gleichzeitig schwenkt gegenläufig der erste Lenker 110 ebenfalls nach unten, wobei die beiden Schwenkbewegungen des ersten Lenkers 110 einerseits und des zweiten und dritten Lenkers 112 und 113 andererseits durch den vierten Lenker 120 zueinander zwangsgesteuert werden.

Wie Figur 2 zeigt, überlagern sich die Schwenkbewegungen der Lenker 110, 112 und 113 derart, dass die Mergereinheit beim Nachuntenfahren gleichzeitig leicht nach vorne nickt. Hierdurch kippt der Aufsammelförderer 4 etwas stärker nach unten als der Querförderer 5, wodurch auf dem Boden liegendes Erntegut zuverlässig aufgenommen wird.

Fährt der Merger hingegen über eine Bodenwelle nach oben, erfolgt eine umgekehrte Schwenkbewegung. Die zweiten und dritten Lenker 112 und 113 nehmen eine weniger geneigte, fast horizontale Stellung ein, während der erste Lenker 110 leicht nach oben geschwenkt wird, und zwar zwangsgesteuert durch den vierten Lenker 120. Hierbei erfolgt eine leichte Nickbewegung des Mergers nach hinten, so dass die Zinken der Pickup bzw. des Aufräumförderers 4 nicht in den Boden stechen.

Um die Mergereinheit beispielsweise zum Zwecke des Transports hochheben zu können, umfasst die Aufhängung eine eigene Hubvorrichtung 124, mit Hilfe derer die Mergereinheit relativ zum Anbaubock 6 angehoben werden kann. In der gezeichneten Ausführungsform besteht die Hubvorrichtung 124 aus einem fremdenergiebetätigten Kraftheber 125, der einerseits am Mergerchassis und andererseits am ersten Lenker 110 angelenkt ist. Dabei bewirkt ein Einziehen des Krafthebers 125 nicht nur ein Anheben des Mergerchassis relativ zum ersten Lenker 110. Über den vierten Lenker 120 wird gleichzeitig der erste Lenker 110 nach oben geschwenkt.

Es versteht sich, dass alternativ der Kraftheber 125 auch am Anbaubock 106 angreifen könnte und unmittelbar den ersten Lenker 110 oder die Mergereinheit nach oben ziehen könnte.

Wie die Figuren 2 und 3 zeigen, kann ein Tastfahrwerk zum Abtasten des Bodens und/oder Abstützen der Mergereinheit 3 am Boden seitlich neben dem Aufsammelförderer 4 angeordnete Tasträder 21 oder Tastkufen umfassen, vgl. Fig. 3, und/oder einen vom Boden des Schneckengehäuses 18 gebildeten Gleitteller aufweisen.

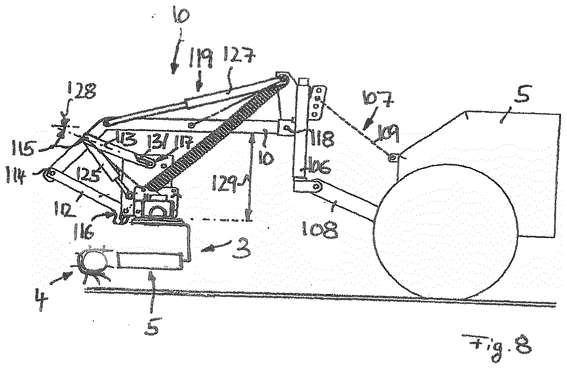

Die alternative Ausführungsform nach Figur 8 ist in ihrem grundsätzlichen Aufbau ähnlich der Ausführung nach den Figuren 1 bis 3, so dass für entsprechende Bauteile dieselben Bezugsziffern verwendet worden sind und insoweit auf die vorangehende Beschreibung verwiesen wird. Im Gegensatz zur ersten Ausführung ist der Querförderer 5 der Mergereinheit nicht als Förderschnecke, sondern als Umlaufförderer in Form eines Querförderbands ausgebildet. Ferner sind bei dieser Ausführung die Schwenkbewegungen des Viergelenks, das von den zweiten und dritten Lenkern 112 und 113 gebildet wird, und die Schwenkbewegung des ersten Lenkers 110 nicht durch einen vierten Lenker miteinander zwangsgekoppelt. Als Steuervorrichtung für die Bewegungen des ersten Lenkers 110 ist bei dieser Ausführung eine fremdenergiebetätigbare Kolbenzylindereinheit 127 vorgesehen, die einerseits am Anbaubock 106 und andererseits am ersten Lenker 110 angreift. Sie steuert die Schwenkstellung des ersten Lenkers 110 in Abhängigkeit der Stellung der Mergereinheit. Eine elektronische Steuereinheit, die in den Figuren nicht dargestellt ist und die Kolbenzylindereinheit 127 ansteuert, erhält hierzu ein Signal eines Winkelsensors 128, das die Winkelstellung des dritten Lenkers 113 wiedergibt und/oder ein Signal eines Abstandssensors 129, das den Abstand der Mergereinheit von dem ersten Lenker 110 angibt. Die Kolbenzylindereinheit 127 wird in Abhängigkeit der Winkelstellung des dritten Lenkers 113 und/oder in Abhängigkeit des Abstands des Mergers vom ersten Lenker 110 um ein bestimmtes Maß bewegt, so dass der erste Lenker 110 in Abhängigkeit der Stellung des Mergers eine ebenfalls definierte Stellung einnimmt. Vorteilhafterweise kann eine beliebige Abhängigkeit der Schwenkstellung des ersten Lenkers von der Stellung des Mähwerks 1 vorgegeben werden. Hierdurch kann die Ansprechcharakteristik der Mähwerksaufhängung optimal an verschiedene Bodenkonturen angepasst werden.

Weiterhin unterscheidet sich die Ausführung nach Figur 4 von der vorhergehenden bezüglich der Ausbildung der Anlenkpunkte 116 und 117 des Mergerrahmenteils an dem zweiten und dritten Lenker 112 und 113. Während bei der ersten Ausführung nach den Figuren 1 bis 7 Kugelgelenke die Achsen 116 und 117 definieren und hierüber auch eine Querpendelbewegung des Mähwerks zulassen, ist bei der Ausführung gemäß Figur 8 eine Führung der Anlenkachsen 116 und 117 des Mergertragrahmenteils in Langlöchern 130 und 131 vorgesehen. Hierdurch kann das Mergerrahmenteil über einen begrenzten Winkelbereich einerseits Nickbewegungen nach vorne und hinten zur Anpassung an Querbodenwellen und andererseits seitliche Nickbewegungen zur Anpassung an Längsbodenwellen ausführen. Wie Figur 8 zeigt, ist der untere Anlenkpunkt 116 in einer Längsnut 130 geführt, die sich quer zur Längsrichtung des zweiten Lenkers 112 erstreckt. Im Gegensatz hierzu ist der obere Anlenkpunkt 117 in einem Langloch 131 geführt, das sich in Längsrichtung des dritten Lenkers 113 erstreckt. Es versteht sich, dass die Anordnung ggf. umgekehrt werden könnte. Es versteht sich ebenfalls, dass die Langlöcher nicht zwangsweise in den Lenkern 112 und 113 ausgebildet sein müssen, sondern auch im Mergertragrahmenteil ausgebildet sein können, wobei in diesem Fall die Lenker 112 und 113 mit entsprechenden Achszapfen in den im Mergertragrahmenteil ausgebildeten Langlöchern geführt wären.

Vorteilhafterweise ist die Mergereinheit an den zweiten und dritten Lenkern 112 und 113 jeweils beweglich gelagert derart, dass Anpassbewegungen bezüglich des einen Lenkers unabhängig von Anpassbewegungen bezüglich des zweiten Lenkers ausgeführt werden können. Dies kann dadurch erreicht werden, dass die Langlöcher 130 und 131 mit ihren Längsachsen im wesentlichen senkrecht zueinander angeordnet sind. Die Anlenkachse 117 kann in dem Langloch 131 eine Anpassbewegung ausführen, ohne dass die Anlenkachse 116 sich in dem Langloch 130 bewegt. Umgekehrt kann die Anlenkachse 116 gegenüber dem Langloch 130 eine Anpassbewegung ausführen, ohne dass sich die Anlenkachse 117 in dem Langloch 131 bewegen muss. Durch die Unabhängigkeit der möglichen Anpassbewegungen voneinander ergibt sich eine insgesamt verbesserte Bodenanpassung.

Auch wenn die Figuren nur jeweils einen ersten, zweiten, dritten und vierten Lenker zeigen, können selbstverständlich jeweils mehrere Exemplare hiervon in zueinander paralleler Anordnung, insbesondere rechts und links an der Maschine, vorgesehen sein.

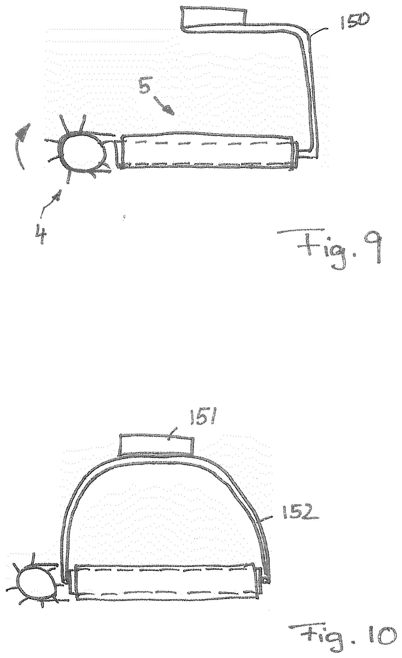

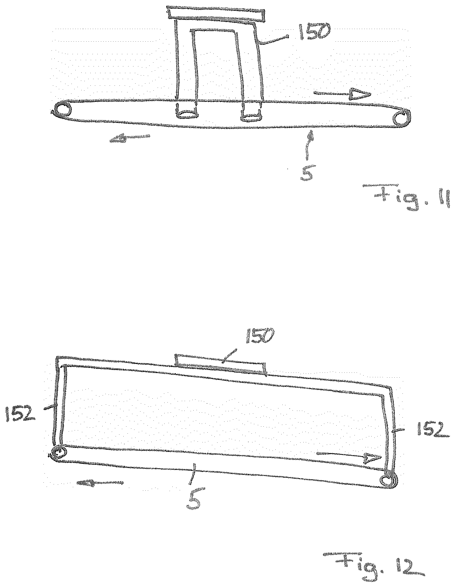

Wie Fig. 9 und Fig. 11 zeigen, kann das Querförderband des Querförderers 5 und damit die Mergereinheit durch ein trägerförmiges, gablerstaplerartig ausgebildetes Mergertragrahmenteil 150 aufgehängt sein, welches etwa mittig zwischen das Obertrumm und das Untertrumm des Querförderbands greifen kann, beispielsweise an den Rahmen, an dem die Umlenkrollen befestigt sind, die das Querförderband aufspannen. Das genannte Mergertragrahmenteil 150 kann insbesondere zwei etwa horizontal vorspringende Trägerzinken aufweisen, die zwischen das Obertrumm und das Untertrumm des Querförderbands greifen. Ein damit verbundenes, abgewinkeltes und etwa aufrecht nach oben gehendes Trägerteil kann dann mit dem eigentlichen Aufhängungsstück verbunden sein, welches sich über dem Querförderband erstrecken kann, vgl. Fig. 9 und Fig. 11.

Alternativ zu einer solchen von hinten mittig in das Querförderband greifenden Aufhängung kann aber auch eine Tragrahmenbrücke 151 vorgesehen sein, die sich quer und liegend ausgerichtet erstrecken kann. Diese Querträgerbrücke 151 kann sich insbesondere liegend über dem Querförderband erstrecken, wobei das genannte Querförderband an der Querträgerbrücke mittels Aufhängungsgabeln 152 aufgehängt sein kann, die torbogenförmig das Querförderband übergreifen, um den Erntegutfluss nicht zu behindern. Die genannten Aufhängungsgabeln 152 können dabei an den endseitigen Umlenkrollen beziehungsweise deren Achsen angreifen, vgl. Fig. 12.

## Patentansprüche

1. Heuwerbungsmaschine in Form eines Mergers zum Schwaden und/oder Querversetzen von Erntegut, mit zumindest einer Mergereinheit (3), die einen Aufsammelförderer (4) zum Aufsammeln des Ernteguts vom Boden und einen Querförderer (5) zum Querfördern des aufgesammelten Ernteguts quer zur Fahrtrichtung (6) aufweist, wobei die zumindest eine Mergereinheit (3) an einem Anbaurahmen (10) aufgehängt ist, der am Schlepper (2) anhebbar und absenkbar anbaubar ist, so dass die Mergereinheit (3) vom Boden aushebbar sind, **dadurch gekennzeichnet, dass** der Anbaurahmen zumindest einen ersten Lenker (110), der an einem durch eine Dreipunktanlenkung an den Schlepper (2) anbaubaren Anbaurahmenteil (106) angelenkt ist und von diesem in etwa fahrtrichtungsparallel auskragt, sowie zumindest einen zweiten und dritten Lenker (112, 113), die jeweils einerseits gelenkig an dem ersten Lenker (110) und andererseits gelenkig an der Mergereinheit oder einem damit verbundenen Mergertragrahmenteil (150, 151) angelenkt sind, so dass der Maschinenrahmen von dem zweiten und dritten Lenker (112, 113) nach Art eines Viergelenks an dem ersten Lenker (110) aufgehängt und auf und ab bewegbar ist, aufweist.

2. Heuwerbungsmaschine nach dem vorhergehenden Anspruch, wobei der erste Lenker (110) um eine liegende, quer zur Fahrtrichtung verlaufende Schwenkachse (118) schwenkbar an dem Anbaurahmenteil (106) gelagert ist.

3. Heuwerbungsmaschine nach dem vorhergehenden Anspruch, wobei eine Steuervorrichtung (119) zur Steuerung der Schwenkstellung des ersten Lenkers (110) in Abhängigkeit der Stellung der Mergereinheit relativ zum ersten Lenker (110) vorgesehen und derart ausgebildet ist, dass der erste Lenker (110) einerseits und die zweiten und dritten Lenker (112, 113) andererseits gegenläufig zueinander schwenken.

4. Heuwerbungsmaschine nach dem vorhergehenden Anspruch 3, wobei die Steuervorrichtung (119) einen vierten Lenker (120) aufweist, der einerseits gelenkig am Anbaurahmenteil (106) und andererseits gelenkig an dem zweiten und/oder dritten Lenker (112, 113) angelenkt ist, wobei der Anlenkpunkt (114, 115) des zweiten oder dritten Lenkers (112, 113) am ersten Lenker (110) zwischen dem Anlenkpunkt (132) des vierten Lenkers (120) an dem genannten zweiten oder dritten Lenker (112, 113) und dem Anlenkpunkt (117) der Mergereinheit an dem genannten zweiten oder dritten Lenker (112, 113) angeordnet ist.

5. Heuwerbungsmaschine nach Anspruch 3, wobei die Steuervorrichtung (119) eine Kolbenzylindereinheit (127) aufweist, die einerseits gelenkig an dem ersten Lenker (110) und andererseits gelenkig an dem Anbaurahmenteil (106) angreift.

6. Heuwerbungsmaschine nach einem der vorhergenden Ansprüche, wobei die zweiten und dritten Lenker (112,113) einerseits und der erste Lenker (110) andererseits sich zueinander gegenläufig erstrecken, wobei der erste Lenker (110) in Fahrtrichtung nach vorne und die zweiten und dritten Lenker (112, 113) in Fahrtrichtung nach hinten oder der erste Lenker (110) sich in Fahrtrichtung nach hinten und die zweiten und dritten Lenker (112, 113) in Fahrtrichtung nach vorne erstrecken, wobei die ersten und zweiten Lenker (112,113) parallele Schwenkachsen und/oder sich liegend quer zur Fahrtrichtung erstreckende Schwenkachsen besitzen und/oder in zumindest einem Teilbereich ihres Schwenkbereichs zueinander parallel ausgerichtet sind, und/oder der erste Lenker (110) von dem Anbaurahmenteil (106) weg auskragt und/oder die zweiten und dritten Lenker (112, 113) sich von ihren Anlenkpunkten am ersten Lenker (110) zu dem Anbaurahmenteil (106) hin erstrecken.

7. Heuwerbungsmaschine nach einem der vorhergehenden Ansprüche, wobei ein Bewegungsdämpfer zum Dämpfen der Wippbewegungen der zweiten und dritten Lenker (112, 113) relativ zum ersten Lenker (110) und/oder relativ zu dem Anbaurahmenteil (106) aufweist.

8. Heuwerbungsmaschine nach einem der vorhergehenden Ansprüche, wobei ein Kraftheber (125) zum Anheben der Mergereinheit relativ zu dem Anbaurahmenteil (106) vorgesehen ist, wobei der genannte Kraftheber (125) vorteilhafterweise einerseits an der Mergereinheit und/oder an dem ersten oder zweiten Lenker (112,113) und andererseits an dem ersten Lenker (110) oder an dem Anbaurahmenteil (106) angelenkt ist.

9. Heuwerbungsmaschine nach einem der vorhergehenden Ansprüche, wobei eine Gewichtsentlastungseinrichtung (121) zur zumindest teilweisen Aufnahme des Gewichts der Mergereinheit vorgesehen ist, wobei die Gewichtsentlastungseinrichtung (121) eine erste Federeinrichtung (122) aufweist, die einerseits an der Mergereinheit und/oder an dem zweiten oder dritten Lenker (112,113) und andererseits an dem ersten Lenker (110) angreift, und/oder eine zweite Feder (123) aufweist, die einerseits an dem Anbaurahmenteil (106) und andererseits an dem ersten Lenker (110) angreift.

10. Heuwerbungsmaschine nach einem der vorhergehenden Ansprüche, wobei zumindest einer der ersten, zweiten oder dritten Lenker (110,112,113) längenveränderbar, insbesondere teleskopierbar, ausgebildet ist.

11. Heuwerbungsmaschine nach einem der vorhergehenden Ansprüche, wobei der Anbaurahmen (10) fahrwerkslos ausgebildet ist und/oder die Mergereinheit (3) nur mittels eines jeweiligen Tastfahrwerks am Boden abgestützt oder frei schwebend über dem Boden geführt sind.

12. Heuwerbungsmaschine nach einem der vorhergehenden Ansprüche, wobei die zumindest eine Mergereinheit (3) um zumindest eine liegende, etwa fahrtrichtungsparallele Pendelachse pendelnd an dem Anbaurahmen (10) aufgehängt sind.

13. Heuwerbungsmaschine nach einem der vorhergehenden Ansprüche, wobei der Querförderer (5) als Schneckenförderer mit einer um eine liegende, quer zur Fahrtrichtung (6) ausgerichtete Schneckendrehachse (16) rotatorisch antreibbare Förderschnecke (15) ausgebildet ist.

14. Heuwerbungsmaschine nach dem vorhergehenden Anspruch, wobei die Förderschnecke (15) von einem Schneckengehäuse (18) eingefasst ist, so dass zwischen Schneckengehäuse (18) und Förderschnecke (15) ein Förderraum (20) gebildet ist, wobei das genannte Schneckengehäuse (18) mit einem Bodenabschnitt bis an den Ablagebereich des Aufsammelförderers (4) herangeführt ist und/oder eine an den Aufsammelförderer (4) angeschlossene Sammelwanne bildet, wobei das Schneckengehäuse (18) vorzugsweise ein Chassis bildet, an dem der Aufsammelförderer (4) gelagert ist und ein Aufhängungsteil zum Aufhängen der Mergereinheit (3) vorgesehen ist, wobei der Schneckenförderer dem Aufsammelförderer (4) vorzugsweise unmittelbar ohne Zwischenschaltung von Übergabeförderern nachgeordnet ist.

15. Heuwerbungsmaschine nach einem der Ansprüche 1 bis 12, wobei der Querförderer (5) als Umlaufförderer mit einem endlos umlaufenden Fördermittel ausgebildet ist, wobei ein Mergertragrahmenteil ein zwischen das Obertrumm und das Untertrumm des Fördermittels des Umlaufförderers greifendes Trägerteil (150) zum Aufhängen des Querförderers (5) aufweist, wobei der Umlaufförderer vorzugsweise an einer Querträgerbrücke (151) aufgehängt ist, wobei die Querförderbrücke (151) torbogenförmige Aufhängungsgabeln (152) umfasst, die an Umlenkrollen des Umlaufförderers angelenkt sind.

## Claims

1. A hay-making machine in the form of a merger for swathing and/or transverse movement of harvest, having at least one merger unit (3) that has a pick-up conveyor (4) for picking up the harvest from the ground and a transverse conveyor (5) for transversely conveying the picked-up harvest transversely to the direction of travel (6), wherein the at least one merger unit (3) is suspended at an attachment frame (10) that can be attached in a raisable and lowerable manner to the tractor (2) so that the merger unit (3) can be raised from the ground, **characterized in that** the attachment frame has at least one first connector (110) that is pivotally connected to an attachment frame part (106) that can be attached to the tractor (2) by a three-point hitch and that projects therefrom approximately in parallel with the direction of travel and has at least one second and one third connector (112, 113) that are each pivotally connected in an articulated manner to the first connector (110), on the one hand, and in articulated manner to the merger unit or to a merger support frame part (150, 151) connected thereto, on the other hand, so that the machine frame is suspended at the first connector (110) in the manner of a four-bar linkage by the second and third connectors (112, 113) and is movable up and down.

2. A hay-making machine in accordance with the preceding claim, wherein the first connector (110) is pivotably supported at the attachment frame part (106) about a horizontal pivot axis (118) extending transversely to the direction of travel.

3. A hay-making machine in accordance with the preceding claim, wherein a control apparatus (119) for controlling the pivot position of the first connector (110) in dependence on the position of the merger unit relative to the first connector (110) is provided and is configured such that the first connector (110), on the one hand, and the second and third connectors (112, 113), on the other hand, pivot in opposite directions with respect to one another.

4. A hay-making machine in accordance with the preceding claim 3, wherein the control apparatus (119) has a fourth connector (120) that is pivotally connected in an articulated manner to the attachment frame part (106), on the one hand, and in an articulated manner to the second and/or third connector (112, 113), on the other hand, wherein the pivotal connection point (114, 115) of the second or third connector (112, 113) at the first connector (110) is arranged between the pivotal connection point (132) of the fourth connector (120) at said second or third connector (112, 113) and the pivotal connection point (117) of the merger unit at said second or third connector (112, 113).

5. A hay-making machine in accordance with claim 3, wherein the control apparatus (119) has a piston-in-cylinder unit (127) that engages, on the one hand, in an articulated manner at the first connector (110) and, on the other hand, in an articulated manner at the attachment frame part (106).

6. A hay-making machine in accordance with one of the preceding claims, wherein the second and third connectors (112, 113), on the one hand, and the first connector (110), on the other hand, extend in opposite directions from one another, wherein the first connector (110) extends to the front in the direction of travel and the second and third connectors (112, 113) extend to the rear in the direction of travel and/or the first connector (110) extends to the rear in the direction of travel and the second and third connectors (112, 113) extend to the front in the direction of travel; wherein the first and second connectors (112, 113) have parallel pivot axes and/or pivot axes extending horizontally transversely to the direction of travel and/or are aligned in parallel with one another in at least a part region of their pivot range and/or the first connector (110) projects away from the attachment frame part (106) and/or the second and third connectors (112, 113) extend from their pivotal connection points at the first connector (110) toward the attachment frame part (106).

7. A hay-making machine in accordance with one of the preceding claims, wherein a movement damper is provided for damping the see-saw movements of the second and third connectors (112, 113) relative to the first connector (110) and/or relative to the attachment frame part (106).

8. A hay-making machine in accordance with one of the preceding claims, wherein a power lift (125) is provided for lifting the merger unit relative to the attachment frame part (106), wherein said power lift (125) is advantageously pivotally connected to the merger unit and/or to the first or second connectors (112, 113), on the one hand, and to the first connector (110) or to the attachment frame part (106), on the other hand.

9. A hay-making machine in accordance with one of the preceding claims, wherein a weight relief device (121) for an at least partial taking up of the weight of the merger unit is provided, wherein the weight relief device (121) has a first spring device (122) that engages at the merger unit and/or at the second or third conductors (112, 113), on the one hand, and at the first conductor (110), on the other hand; and/or has a second spring (123) that engages at the attachment frame part (106), on the one hand, and at the first connector (110), on the other hand.

10. A hay-making machine in accordance with one of the preceding claims, wherein at least one of the first, second or third connectors (110, 112, 113) is longitudinally variable, in particular telescopic.

11. A hay-making machine in accordance with one of the preceding claims, wherein the attachment frame (10) is configured without a chassis and/or the merger unit (3) is only supported at the ground by means of a respective contact chassis or is guided hovering freely over the ground.

12. A hay-making machine in accordance with one of the preceding claims, wherein the at least one merger unit (3) is suspended in an oscillating manner at the attachment frame (10) about at least one horizontal pendulum axis approximately in parallel with the direction of travel.

13. A hay-making machine in accordance with one of the preceding claims, wherein the transverse conveyor (5) is configured as a worm conveyor having an auger (15) rotationally drivable about a horizontal worm axis of rotation (16) aligned transversely to the direction of travel (6).

14. A hay-making machine in accordance with the preceding claim, wherein the auger (15) is encompassed by a worm housing (18) so that a conveying space (20) is formed between the worm housing (18) and the auger (15), wherein said worm housing (18) is led at a base section up to the deposition region of the pick-up conveyor (4) and/or forms a collection tub connected to the pick-up conveyor (4); wherein the worm housing (18) preferably forms a chassis at which the pick-up conveyor (4) is supported and a suspension part is provided for suspending the merger unit (3), wherein the worm conveyor is preferably arranged directly downstream of the pick-up conveyor (4) without interposition of transfer conveyors.

15. A hay-making machine in accordance with one of the claims 1 to 12, wherein the transverse conveyor (5) is configured as a revolving conveyor having a continuously revolving conveying means, wherein a merger support frame part has a carrier part (150) engaging between the upper run and the lower run of the conveying means of the revolving conveyor for suspending the transverse conveyor (5); wherein the revolving conveyor is preferably suspended at a crossbeam-bridge (151), wherein the crossbeam bridge (151) comprises suspension forks (152) that are in form of a gate arch and that are pivotally connected to pulley blocks of the revolving conveyor.

## Revendications

1. Faneuse sous forme de dispositif collecteur pour l'andainage et/ou le déplacement transversal de la récolte, comprenant au moins une unité de collecteur (3), qui comporte un transporteur ramasseur (4) destiné à ramasser la récolte du sol et un transporteur transversal (5) pour le transport transversal de la récolte ramassée, transversalement au sens de la marche (6), l'au moins une unité de collecteur (3) étant suspendue à un cadre de montage (10), qui peut être monté sur le tracteur (2) de manière levable et abaissable, de telle sorte que l'unité de collecteur (3) peut être soulevée du sol,
**caractérisée en ce que**
le cadre de montage comporte au moins une première barre directrice (110), qui est articulée sur une partie de cadre de montage (106) pouvant être montée sur le tracteur (2) par un couplage à trois points et qui fait saillie depuis celle-ci approximativement parallèlement au sens de la marche, ainsi qu'au moins une deuxième et une troisième barre directrice (112, 113), qui sont articulées respectivement d'une part de manière articulée sur la première barre directrice (110) et d'autre part de manière articulée sur l'unité de collecteur ou sur une partie de cadre porteur de collecteur (150, 151) reliée à celle-ci, de telle sorte que le cadre de la machine est suspendu à la première barre directrice (110) par la deuxième et la troisième barre directrice (112, 113) à la manière d'un quadrilatère articulé et peut être déplacé de haut en bas et inversement.

2. Faneuse selon la revendication précédente, dans laquelle la première barre directrice (110) est montée sur la partie de cadre de montage (106) de manière pivotante autour d'un axe de pivotement (118) horizontal s'étendant transversalement au sens de la marche.

3. Faneuse selon la revendication précédente, dans laquelle un dispositif de commande (119) est prévu pour la commande de la position de pivotement de la première barre directrice (110) en fonction de la position de l'unité de collecteur par rapport à la première barre directrice (110) et est réalisé de telle manière que la première barre directrice (110) d'une part et la deuxième et la troisième barre directrice (112, 113) d'autre part pivotent dans le sens opposé l'une par rapport aux autres.

4. Faneuse selon la revendication précédente 3, dans laquelle le dispositif de commande (119) comporte une quatrième barre directrice (120), qui est articulée d'une part de manière articulée sur la partie de cadre de montage (106) et d'autre part de manière articulée sur la deuxième et/ou la troisième barre directrice (112, 113), le point d'articulation (114, 115) de la deuxième ou la troisième barre directrice (112, 113) sur la première barre directrice (110) étant disposé entre le point d'articulation (132) de la quatrième barre directrice (120) sur ladite deuxième ou troisième barre directrice (112, 113) et le point d'articulation (117) de l'unité de collecteur sur ladite deuxième ou troisième barre directrice (112, 113).

5. Faneuse selon la revendication 3, dans laquelle
le dispositif de commande (119) comporte une unité piston-cylindre (127), qui saisit d'une part la première barre directrice (110) de manière articulée et d'autre part la partie de cadre de montage (106) de manière articulée.

6. Faneuse selon l'une des revendications précédentes, dans laquelle
les deuxième et troisième barres directrices (112, 113) d'une part et la première barre directrice (110) d'autre part s'étendent dans le sens opposé les unes par rapport à l'autre, la première barre directrice (110) s'étendant vers l'avant dans le sens de la marche et les deuxième et troisième barres directrices (112, 113) vers l'arrière dans le sens de la marche ou la première barre directrice (110) s'étendant vers l'arrière dans le sens de la marche et les deuxième et troisième barres directrices (112, 113) vers l'avant dans le sens de la marche,
les première et deuxième barres directrices (112, 113) possédant des axes de pivotement parallèles et/ou des axes de pivotement s'étendant horizontalement et transversalement au sens de la marche et/ou étant orientées parallèlement l'une à l'autre dans au moins une partie de leur plage de pivotement, et/ou la première barre directrice (110) faisant saillie de manière s'éloignant de la partie de cadre de montage (106) et/ou les deuxième et troisième barres directrices (112, 113) s'étendant de leurs points d'articulation sur la première barre directrice (110) à la partie de cadre de montage (106).

7. Faneuse selon l'une des revendications précédentes, dans laquelle un amortisseur de mouvement est prévu pour amortir les mouvements de balancement des deuxième et troisième barres directrices (112, 113) par rapport à la première barre directrice (110) et/ou par rapport à la partie de cadre de montage (106).

8. Faneuse selon l'une des revendications précédentes, dans laquelle un vérin (125) est prévu pour le levage de l'unité de collecteur par rapport à la partie de cadre de montage (106), ledit vérin (125) étant articulé de manière avantageuse d'une part sur l'unité de collecteur et/ou sur la première ou la deuxième barre directrice (112, 113) et d'autre part sur la première barre directrice (110) ou sur la partie de cadre de montage (106).

9. Faneuse selon l'une des revendications précédentes, dans laquelle
un dispositif de décharge du poids (121) est prévu pour recevoir au moins en partie le poids de l'unité de collecteur,
le dispositif de décharge du poids (121) comportant un premier dispositif à ressort (122), qui saisit d'une part l'unité de collecteur et/ou la deuxième ou la troisième barre directrice (112, 113) et d'autre part la première barre directrice (110), et/ou comportant un second ressort (123) qui saisit d'une part la partie de cadre de montage (106) et d'autre part la première barre directrice (110).

10. Faneuse selon l'une des revendications précédentes, dans laquelle au moins une des première, deuxième ou troisième barres directrices (110, 112, 113) est réalisée réglable en longueur, en particulier télescopique.

11. Faneuse selon l'une des revendications précédentes, dans laquelle le cadre de montage (10) est réalisé sans mécanisme de déplacement et/ou l'unité de collecteur (3) est supportée au sol uniquement au moyen d'un mécanisme de déplacement palpeur respectif ou est guidée flottante au-dessus du sol.

12. Faneuse selon l'une des revendications précédentes, dans laquelle l'au moins une unité de collecteur (3) est suspendue au cadre de montage (10) de manière oscillante autour d'au moins un axe d'oscillation horizontal, approximativement parallèle au sens de la marche.

13. Faneuse selon l'une des revendications précédentes, dans laquelle le transporteur transversal (5) est réalisé sous la forme d'un transporteur à vis comprenant une vis sans fin (15) pouvant être entraînée en rotation autour d'un axe de rotation de vis sans fin (16) horizontal, orienté transversalement au sens de la marche (6).

14. Faneuse selon la revendication précédente, dans laquelle
la vis sans fin (15) est encadrée par un carter de vis sans fin (18), de telle sorte qu'entre le carter de vis sans fin (18) et la vis sans fin (15) un espace de transport (20) est formé, ledit carter de vis sans fin (18) allant avec une portion de fond jusqu'à la zone de dépôt du transporteur ramasseur (4) et/ou formant une cuve de collecte reliée au transporteur ramasseur (4),
le carter de vis sans fin (18) formant de préférence un châssis, sur lequel est monté le transporteur ramasseur (4) et une partie de suspension étant prévue pour la suspension de l'unité de collecteur (3), le transporteur à vis étant disposé en aval du transporteur ramasseur (4) de préférence directement sans intercaler de transporteur de transfert.

15. Faneuse selon l'une des revendications 1 à 12, dans laquelle
le transporteur transversal (5) est réalisé sous la forme d'un transporteur continu doté d'un moyen de transport rotatif sans fin, une partie de cadre porteur de collecteur comportant une partie de support (150), qui s'accroche entre le brin supérieur et le brin inférieur du moyen de transport du transporteur continu, pour la suspension du transporteur transversal (5),
le transporteur continu étant suspendu de préférence à un pont formant traverse (151), le pont formant traverse (151) comprenant des étriers de suspension (152) en forme d'arceau, qui sont articulés sur des poulies de renvoi du transporteur continu.
